# EUROPÄISCHE PATENTSCHRIFT

(11) **EP 0 284 566 B1**
(45) Veröffentlichungstag und Bekanntmachung des Hinweises auf die Patenterteilung: **16.06.1993**
(21) Anmeldenummer: 88810180.5
(22) Anmeldetag: 21.03.1988
(51) Int. Cl.: B60J 5/04

(54) **Aufprallträger für Fahrzeugtüren, insbesondere für Türen von Personenkraftwagen**
Shock beam for vehicle doors especially for doors of automotive vehicles
Poutre de choc pour portes de véhicule notamment pour portes de véhicules automobiles

(30) Priorität: 25.03.1987 DE 3709489
(43) Veröffentlichungstag der Anmeldung: 28.09.1988
(73) Patentinhaber: ALUSUISSE-LONZA SERVICES AG, 8034 Zürich (CH)
(72) Erfinder: Frank, Simon, D-7708 Watterdingen (DE)

(56) Entgegenhaltungen:
- EP-A- 0 063 325
- EP-A- 0 267 895
- DE-A- 2 021 906
- DE-A- 2 328 829
- DE-B- 1 959 988

## Beschreibung

Die Erfindung betrifft einen Aufprallträger für Fahrzeugtüren, insbesondere für Türen von Personenkraftwagen, der aus einer Leichtmetallegierung auf dem Wege des Strangpressens hergestellt und in der Fahrzeugtür in Fahrtrichtung verlaufend beidends so festlegbar ist, daß eine Profilwand des Aufprallträgers als Innengurt zum Fahrzeuginnenraum weist und eine dazu in Abstand vorgesehene zweite Profilwand einen Außengurt bildet.

Derartige Aufprallträger werden in den Fahrzeugtüren zur Sicherung der Fahrzeuginsassen gegen quer zur Fahrtrichtung angreifende, also seitliche Verformungskräfte bei Kollision vorgesehen. Solche Aufprallträger mit I-förmigem Querschnitt, dessen Steg in Einbaulage i.w. horizontal innerhalb der Fahrzeugtür verläuft, sind beispielsweise der EP-A-00 63 325 zu entnehmen und haben gegenüber Aufprallträgern aus zusammengesetzten Blechprofilen oder in Form von Stahlrohren den Vorteil geringeren Gewichtes und -- insbesondere im Hinblick auf die genannten Blechprofile -- einfacherer Herstellung.

Als Mangel eines I-Querschnittes hat sich -- in den für Fahrzeugtüren einbaufähigen Dimensionen -- vor allem dessen nicht ausreichende Formsteifigkeit gegen Verwindung bei einer Aufprallverformung erwiesen. Abhilfe vermag hier ein stranggepreßtes, jene Gurte anbietendes Hohlprofil zu schaffen, das allerdings bei großer Aufprallkraft hin und wieder bricht.

In Kenntnis dieses Standes der Technik hat sich der Erfinder das Ziel gesetzt, einen Aufprallträger der eingangs erwähnten Art so zu verbessern, daß er bei geringem Gewicht ein hohes Maß an Formhaltigkeit bei ausreichendem Kompensationsvermögen für die auftretende Verformungsenergie aufweist und bei einem Aufprall eine kontrollierbare Gestalt bei unversehrtem Innengurt annimmt. Zudem sollen Herstellung und Handhabung des Aufprallträgers einfach sein.

Zur Lösung dieser Aufgabe führt, daß der Außengurt des Aufprallträgers mit einem Paar von an gegenüberliegenden Gurtlängskanten eingebrachten Randeinformungen versehen ist, von denen jede in gleichem Abstand zu -- sowie an unterschiedlichen Seiten von -- einer der Auflagelinie eines in einem Belastungstest verwendeten Druckkörpers entsprechenden Querebene durch den Aufprallträger liegt, wobei diese Querebene in die Längsmitte des Aufprallprofiles fällt oder in Abstand dazu verläuft.

Bei Aufprallträgern, die zum Einbau in Vordertüren bestimmt sind, genügt ein einziges solches Paar von Randeinformungen; beidseits der Längsmitte des Aufprallträgers ist jeweils eine Randeinformung dieser Paarung angeordnet.

Hintertüren weisen in Anpassung an den hinteren Radkasten eine sehr asymmetrische Form auf, so daß ein Aufprall üblicherweise nicht in der Längsmitte des Hintertür-Aufprallträgers auftrifft, sondern zum Radkasten hin versetzt. Aus diesem Grunde hat sich als erforderlich erwiesen, den Aufprallträger für die Hintertür mit zwei Paaren derartiger Randeinformungen zu versehen. Die Mittelebenen beider Paare schließen zwischen sich eine Ebene durch die Längsmitte des Aufprallträgers ein. Dabei berührt vorteilhafterweise eine Randeinformung jedes Paares etwa diese Längsmitte.

Die Randeinformungen bieten teilkreisförmige Schnittkanten an, wobei bevorzugt die Randtiefe der Randeinformung etwa einem Fünftel der Randweite entspricht oder etwa einem Drittel des Krümmungsradius der Schnittkante. Letzterer mißt in bevorzugter Ausführung etwa 15 mm.

Wie Versuche ergeben haben, verformt sich dank dieser Maßgabe der Aufprallträger gleichmäßig bogenförmig, ohne daß es zu einem Bruch käme. Der Innengurt wird zwar --in Sicht von oben -- etwa U-förmig gebogen, bleibt aber ansonsten unversehrt. Der Außengurt wird abschnittsweise in seiner Gurtebene verschoben, wobei die beiden Randeinformungen diesen geneigt zur Gurtlängsachse stehenden Abschnitt bestimmen; beim Verformungsvorgang entsteht dank der Randeinformungen im Metall des Aufprallträgers ein günstiger Materialfluß, und gefährliche Materialanhäufungen im Bereich der Aufprallstelle werden vermieden. Weitere Einzelheiten zur Gestalt und Dimensionierung der Randeinformungen sind den Unteransprüchen zu entnehmen.

Einzelheiten der Erfindung ergeben sich aus der nachfolgenden Beschreibung bevorzugter Ausführungsbeispiele sowie anhand der Zeichnung; diese zeigt in
- Fig. 1: die Frontansicht einer Fahrzeugtür mit darin vorgesehenem Aufprallträger;
- Fig. 2: einen Abschnitt eines in etwa natürlicher Größe und geschnittener Schrägsicht dargestellten Aufprallträgers mit einem Innen- und einen Außengurt;
- Fig. 3: den gegenüber den natürlichen Maßen vergrößerten Querschnitt durch einen anderen Aufprallträger;
- Fig. 4: die Draufsicht auf den Außengurt einer Ausführung des Aufprallträgers;
- Fig. 5: die Seitenansicht zu Fig. 4;
- Fig. 6: die Draufsicht auf den Außengurt einer anderen Ausführungsform des Aufprallträgers;
- Fig. 7: einen Teil der Seitenansicht zu Fig. 6;
- Fig. 8: einen vergrößerten Ausschnitt aus Fig. 6;
- Fig. 9: den vergrößerten Querschnitt durch Fig. 8 nach deren Linie IX-IX;
- Fig. 10: eine vergrößerte Draufsicht auf einen Teil des Außengurtes nach dessen Verformung;
- Fig. 11: die Seitenansicht zu Fig. 10;
- Fig. 12: den Querschnitt durch eine andere Ausführung;
- Fig. 13: ein Kraft-Weg-Diagramm zu Belastungsversuchen.

In einer Fahrzeugtür 10 für einen aus Gründen der Uebersichtlichkeit nicht wiedergegebenen Personenkraftwagen verläuft innerhalb eines geschlossenen unteren Türkastens 11 ein stranggepreßtes Aluminiumprofil als Aufprallträger 20. Dessen Abstand i von der oberen Kante 14 des Türkastens 11 ist größer als die Absenktiefe einer in einem Rahmen 12 erkennbaren Fensterscheibe 13.

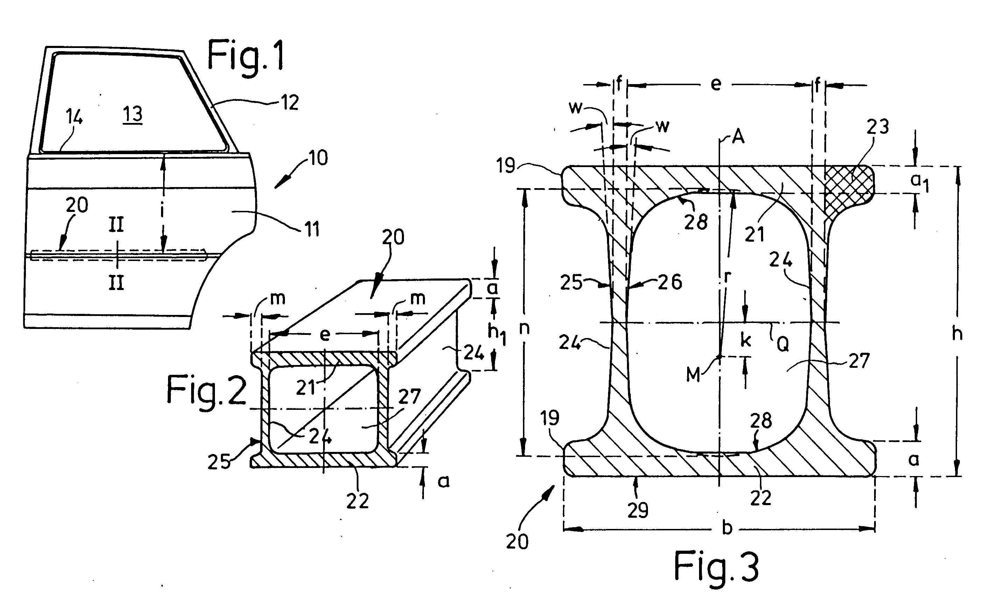

Der Aufprallträger 20 weist gemäß Fig. 2 querschnittlich zwei in Abstand h₁ von beispielsweise 24 mm zueinander parallele Wände einer Dicke a von hier 4 mm auf, die in Einbaulage des Aufprallträgers 20 einen zum Fahrzeuginneren gerichteten Innengurt 22 sowie einen der Türaußenfläche benachbarten Außengurt 21 bilden. Letzterer ist mit dem Innengurt 22 durch zwei schmale Querwände 24 zu einem Hohlprofil mit Profilkammer 27 ergänzt. Die Kammerbreite e beträgt hier 30 mm.

Sowohl Innengurt 22 als auch Außengurt 21 -- nachfolgend auch Gurtwände genannt -- kragen beidseits um ein Maß m über die Außenflächen 25 der Querwände 24 hinaus und bilden so Wulstabschnitte 23 (siehe Fig. 3, oben rechts).

Beim Aufprallprofil 20 nach Fig. 3 einer Gesamthöhe h von beispielsweise 27,4 mm, einer Gesamtbreite b von 38 mm und einer Höhe a der Profilwandlängskanten 19 von 4,7 mm ist deutlich zu erkennen, daß eine parallel zu den Querwänden 24 gerichtete Hauptachse A ebenso eine Symmetrieachse für den Querschnitt bildet wie eine sie kreuzende Querachse Q. Auf der Hauptachse A liegt in einem Abstand k (etwa 5 mm) von der Querachse Q der Mittelpunkt M für einen Radius r (etwa 20 mm), welcher die innere Querschnittskontur der hier eine entsprechend gekrümmte Innenseite 28 anbietenden Gurtwände 21, 22 bestimmt; deren mittlere Dicke a₁ beträgt hier 3 mm, so daß eine lichte Kammerhöhe n von etwa 32 mm entsteht.

An beide Gurtwände 21, 22 stoßen die Querwände 24 mittleren inneren Abstands e von 22,4 mm -- einer Dicke f von hier 1,8 mm an der Querachse Q -- mit gerundeten Uebergängen an. Die Außenfläche 25 und die Innenfläche 26 der Querwand 24 sind von jenem Uebergang bis zur Querachse Q in Winkeln w von 2,5° zueinander geneigt, so daß insoweit ein sich zur Querachse Q hin konisch verjüngender Querschnitt der Querwand 24 entsteht.

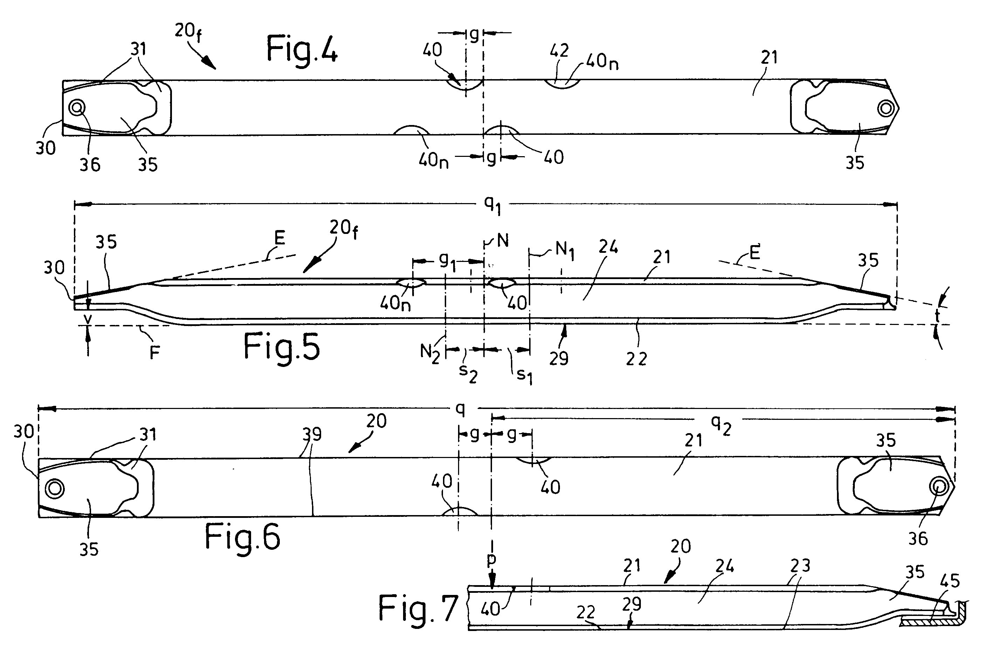

Der Aufprallträger 20_{f} gemäß Fig. 4,5 weist für den Einbau in eine Vordertür eine beispielsweise Gesamtlänge q₁ von etwa 974 mm auf, der für eine hintere Fahrzeugtür 10 bestimmte Aufprallträger 20 der Fig. 6 eine Gesamtlänge q von etwa 672 mm. Die Aufprallträger 20, 20_{f} sind jeweils an beiden Enden in einer Linie E abgeschrägt, welche mit der Trägerunterseite 29 bzw. deren Ebene F einen spitzen Winkel t einschließt. Durch diesen schräggelegten Schnitt entsteht eine Stirnkante 30, die aus der Ebene F der ursprünglichen Kontur der Trägerinnenseite 29 in einem Versetzungsmaß v aufwärts versetzt ist.

In Draufsicht nach Fig. 4, 6 ist die durch den beschriebenen Schnittvorgang entstehende Schrägfläche 31 zu erkennen, die sich aus Schnittflächen der Querwände 24 und des Innenflansches 21 zusammensetzt sowie U-förmiger Gestalt ist.

Die in Fig. 7 durch einen Pfeil P angedeutete Kraftrichtung bei einem Aufprall läßt die weiter oben beschriebene Lage des Aufprallträgers 20 in der Türkonstruktion besonders deutlich werden: Die Kraft P trifft auf den Außengurt 21, der sich zum Wageninnenraum hin zu verformen trachtet. Der Abstand einer angenommenen Geraden N, in der hier die Kraft P wirkt und die in Fig. 7 in Profillängsmitte liegt, ist von der Einspannstelle --Bohrung 36 im Innengurt 22 -- in Fig. 7 mit q₂ bezeichnet und beträgt hier beispielsweise 475 mm. Die durch die beschriebene Schnittebene E und die dazu erläuterte Verkröpfung der Trägerinnenseite 29 entstandenen Profilenden 35 werden in nicht dargestellten Sicken des Türrahmens eingelegt und mittels die Bohrungen 36 durchsetzender Schrauben befestigt. In Fig. 7 ist bei 45 ein Teil der Türkonstruktion angedeutet, welcher jene Trägerinnenseite 29 von außen her anliegt.

In den Außengurt 21 ist in Fig. 6 beidseits der von der Geraden N bestimmten Querschnittsebene in gleichen Mittelabständen g von hier etwa 30 mm an jeder Gurtlängskante 39 eine Randeinformung 40 eingebracht, d.h. jeder Wulstabschnitt 23 des Außengurtes 21 enthält eine eine solche Randeinformung 40, die allerdings an entgegengesetzten Seiten jener Ebene der Geraden N liegen und in Draufsicht einen teilkreisförmigen Schnittrand 42 besitzen. Dessen Radius R mißt hier 15,5 mm bei einer Randtiefe u von etwa 5 mm, so daß die Randweite d beispielsweise 22 mm beträgt.

Beim Ausführungsbeispiel der Fig. 4, 5 sind beidseits der Ebene durch die Profillängsmitte N jeweils zwei Randeinformungen 40, 41ₙ je Gurtlängskante 39 vorhanden. Die jeweils der Ebene benachbarte Randeinformung 40 ist von jener hier (Abstand g) 12,5 mm entfernt, die andere Randeinformung 40ₙ etwa 60 mm (Abstand g₁).

Während das Ausführungsbeispiel 20 der Fig. 6, 7 in Fronttüren stets so eingebaut ist, daß die Aufprallkraft P voraussichtlich in Profillängsmitte N angreift, bedarf es bei der hinteren Fahrzeugtür 10 -- für Rechts- und Linkseinbau -- beider Randeinformungspaare; je nach Einbauseite wirkt die Aufprallkraft P in einer Geraden N₁ oder N₂ (Fig. 5).

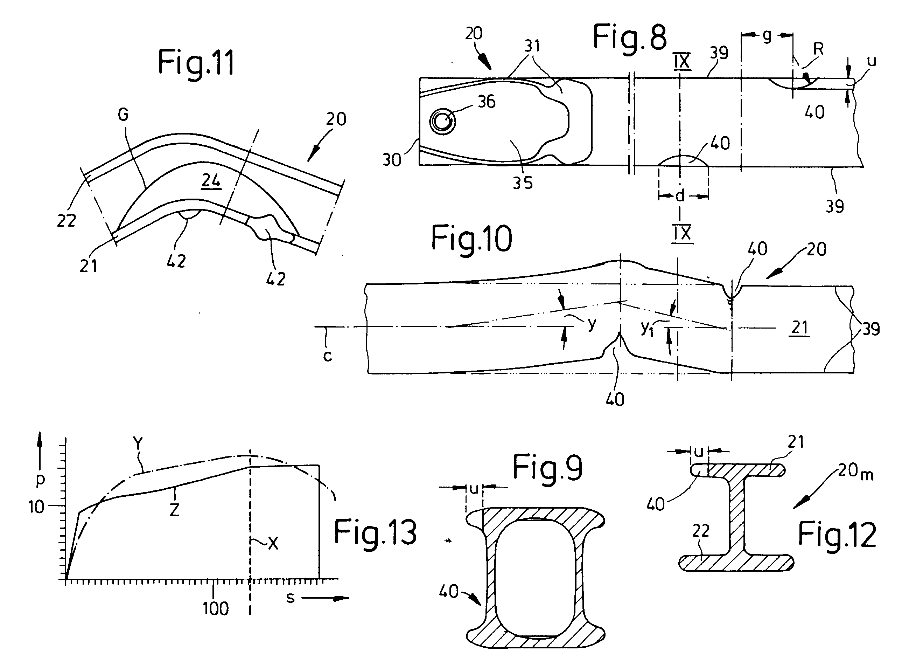

Die Paare von Randeinformungen 40/40ₙ in Fig. 4, 5 bzw. 40/40 in Fig. 6, 7 bewirken ein günstiges Verformungsverhalten des Aufprallträgers 20, 20_{f}, und es hat sich gezeigt, daß der Abstand g von 20 bis 40 mm besonders günstig ist. Bei einem Aufprall erfolgt bei stranggepreßten Hohlprofilen 20, 20_{f} -- aber auch bei I-Profilen 20ₘ gemäß Fig. 12 oder anderen Querschnittsformen -- dank der Randeinformungen 40 eine gleichmäßige Verformung mit einer angenäherten Mittelebene durch die Gerade N bzw. N₁ oder N₂. Der Abstand der Geraden N von der Geraden N₁ bzw. N₂ ist mit s₁ bzw. s₂ bezeichnet.

Gemäß Fig. 10,11 wird der Aufprallträger 20 bei einem Aufprall so verformt, daß Außen- und Innenflansch 21,22 zum Wageninneren gebogen werden. Gleichzeitig wird ein Abschnitt des Außengurtes 21 aus dessen Längsachse C geschoben (Winkel y von etwa 8° in Fig. 10). Die eine Grenze dieses verformten Abschnittes wird etwa bestimmt durch die obere Randeinformung 40 (in Fig. 10 rechts), von der aus der Außengurt 21 in einem beispielsweisen Winkel y₁ von 15° ansteigt, um etwa im Bereich der unteren Randeinformung 40 in jenem Winkel y wieder zur ursprünglichen Kontur abzufallen. Im Tiefsten der Randeinformungen 40 wird deren Schnittrand 42 breiter, wie insbesondere Fig. 11 verdeutlicht. Die beschriebene Verformung des Außengurtes 21 führt zu einer in Fig. 11 wiedergegebenen Grenzkontur G, außerhalb deren der Aufprallträger 20 seine ursprüngliche Form -- von der gezeigten Biegung zum Wageninneren abgesehen -- nahezu unverändert beibehält.

Das Kraft-Weg-Diagramm nach Fig. 12 zeigt über dem Durchbiegungsweg S in mm in Abhängigkeit von der Druckkraft P (kN) eine ausgezogene Kurve Z mit dem Ergebnis eines Belastungstestes eines an den Bohrungen 36 widergelagerten Aufprallträgers 20 bzw. 20_{f} der oben beschriebenen Länge q bzw. q₁ bei mittiger Beaufschlagung mit der Kraft P von etwa 1,4 Tonnen eines Druckkörpers, bei einer Eindrückgeschwindigkeit unter 12,7 mm/sec. Die Kurve Y gibt die entsprechende Charakteristik für Stahlrohre -- als übliche Aufprallprofile -- wieder - Kurve Y läßt an der Vertikalen X ein Abknicken zur Weg-Achse S erkennen.

## Patentansprüche

1. Aufprallträger (20, 20_{f}, 20ₘ) für Fahrzeugtüren (10), insbesondere für Türen von Personenkraftwagen, der aus einer Leichtmetallegierung auf dem Wege des Strangpressens hergestellt und in der Fahrzeugtür etwa in Fahrtrichtung verlaufend beidends so festlegbar ist, daß eine Profilwand des Aufprallträgers als Innengurt (22) zum Fahrzeuginnenraum weist und eine dazu in Abstand vorgesehene zweite Profilwand des Aufprallträgers einen Außengurt (21) bildet,
dadurch gekennzeichnet,
daß der Außengurt (21) des Aufprallträgers (20, 20_{f}, 20ₘ) mit einem Paar von an gegenüberliegenden Gurtlängskanten (39) eingebrachten Randeinformungen (40) versehen ist, von denen jede in gleichem Abstand (g) zu sowie an unterschiedlichen Seiten von einer der Auflagelinie eines in einem Belastungstest verwendeten Druckkörpers entsprechenden Querebene durch den Aufprallträger liegt, wobei diese Querebene in die Längsmitte (N) des Aufprallträgers fällt oder in Abstand (s₁, s₂) dazu verläuft.

2. Aufprallträger nach Anspruch 1, dadurch gekennzeichnet, daß beidseits seiner Längsmitte (N) in gleichem Abstand (s₁, s₂) eine Querebene (N₁, N₂) für jeweils ein Paar von Randeinformungen (40, 40ₙ) verläuft.

3. Aufprallträger nach Anspruch 2, dadurch gekennzeichnet, daß eine Randeinformung (40) jeder Paarung (40, 40ₙ) die Längsmitte (N) berührt (Fig.4).

4. Aufprallträger nach Anspruch 1 oder 2, dadurch gekennzeichnet, daß seine Länge (q) sich zum mittleren Abstand (g) der Randeinformung (40) von ihrer Querebene verhält wie 30:1 bis 40:1, bevorzugt 35:1.

5. Aufprallträger nach Anspruch 2 oder 3, dadurch gekennzeichnet, daß sich seine Länge (q₁) zum mittleren Abstand (s₁, s₂) der Geraden (N) zu der Ebene (N₁, N₂) der Paare von Randeinformungen (40, 40ₙ) verhält wie 14:1 bis 20:1, bevorzugt 17:1.

6. Aufprallträger nach einem der Ansprüche 1 bis 5, gekennzeichnet durch Randeinformungen (40, 40ₙ) mit teilkreisförmiger Schnittkante (42).

7. Aufprallträger nach Anspruch 6, dadurch gekennzeichnet, daß die Randtiefe (u) der Randeinformung (40, 40ₙ) einem Fünftel der Randweite (d) entspricht oder einem Drittel des Krümmungsradius (R) der Schnittkante (42).

8. Aufprallträger nach Anspruch 6 oder 7, gekennzeichnet durch einen Krümmungsradius (R) von 15 mm.

## Claims

1. Impact bar (20, 20_{f}, 20ₘ) for vehicle doors (10), especially for doors of passenger cars, which is produced by extrusion from a light metal alloy and can be fixed to either end of the vehicle door extending in the direction of travel in such a manner that one profile wall of the impact bar forms an inner flange (22) facing towards the interior of the vehicle and a second profile wall of the impact bar provided at a distance therefrom forms an outer flange (21), characterised in that the outer flange (21) of the impact bar (20, 20_{f}, 20ₘ) is provided with a pair of edge indentations (40) applied to opposing longitudinal edges (39) of the flange, each of which is situated at the same distance (g) from and on different sides of a transverse plane through the impact bar corresponding to the bearing line of a pressure body used in a load test, this transverse plane falling in the longitudinal centre (N) of the impact bar or extending at a distance (s₁, s₂) therefrom.

2. Impact bar according to claim 1, characterised in that a transverse plane (N₁, N₂) for a pair of edge indentations (40, 40ₙ) extends at the same distance (s₁, s₂) on either side of its longitudinal centre (N).

3. Impact bar according to claim 2, characterised in that one edge indentation (40) of each pair (40, 40ₙ) contacts the longitudinal centre (N) (Fig. 4).

4. Impact bar according to claim 1 or claim 2, characterised in that the ratio of its length (q) to the average distance (g) between the edge indentation (40) and its transverse plane is 30:1 to 40:1, preferably 35:1.

5. Impact bar according to claim 2 or claim 3, characterised in that the ratio of its length (q₁) to the average distance (s₁, s₂) between the straight line (N) and the plane (N₁, N₂) of the pairs of edge indentations (40, 40ₙ) is 14:1 to 20:1, preferably 17:1.

6. Impact bar according to one of claims 1 to 5, characterised by edge indentations (40, 40ₙ) with partially circular cut edges (42).

7. Impact bar according to claim 6, characterised in that the edge depth (u) of the edge indentation (40, 40ₙ) corresponds to a fifth of the edge width (d) or a third of the radius of curvature (R) of the cut edge (42).

8. Impact bar according to claim 6 or claim 7, characterised by a radius of curvature (R) of 15 mm.

## Revendications

1. Poutre de choc (20, 20f, 20m) pour portes (10) de véhicules automobiles, en particulier pour portes de voitures particulières, qui est obtenue par extrusion d'un alliage léger et qui peut être fixée aux deux extrémités dans la porte de véhicule automobile en s'étendant sensiblement dans la direction de déplacement de telle manière qu'une paroi profilée de la poutre de choc soit tournée sous forme de semelle interne (22) vers l'espace intérieur du véhicule automobile et qu'une deuxième paroi profilée de la poutre de choc, distante de la première, forme une semelle externe (21), caractérisée en ce que la semelle externe (21) de la poutre de choc (20, 20f, 20m) est munie d'une paire d'évidements latéraux (40) pratiqués sur des bords longitudinaux opposés (39) de la semelle, chaque évidement s'étendant à égale distance (g) et sur les côtés différents d'un plan transversal à la poutre de choc et correspondant à la ligne d'appui d'un corps presseur utilisé dans un essai de charge, ce plan transversal étant situé au centre (N) de la poutre de choc ou s'étendant à distance (s₁, s₂) de celui-ci.

2. Poutre de choc selon la revendication 1, caractérisée en ce que des deux côtés de son centre (N) s'étend à égale distance (s₁, s₂) un plan transversal (N₁, N₂) pour une paire d'évidements latéraux (40, 40ₙ).

3. Poutre de choc selon la revendication 2, caractérisée en ce qu'un évidement latéral (40) de chaque paire (40, 40ₙ) est en contact avec le centre (N) (figure 4).

4. Poutre de choc selon la revendication 1 ou 2, caractérisée en ce que sa longueur (q) et la distance moyenne (g) entre l'évidement latéral (40) et son plan transversal sont entre elles dans le rapport de 30:1 à 40:1, de préférence de 35:1.

5. Poutre de choc selon la revendication 2 ou 3, caractérisée en ce que sa longueur (q₁) et la distance moyenne (s₁, s₂) entre la droite (N) et le plan (N₁, N₂) des paires d'évidements latéraux (40, 40ₙ) sont entre elles dans le rapport de 14:1 à 20:1, de préférence de 17:1.

6. Poutre de choc selon l'une des revendications 1 à 5, caractérisée par des évidements latéraux (40, 40ₙ) munis d'un bord de coupe (42) en forme d'arc de cercle.

7. Poutre de choc selon la revendication 6, caractérisée en ce que la profondeur latérale (u) de l'évidement latéral (40, 40ₙ) correspond à 1/5 de la largeur latérale (d) ou à 1/3 du rayon de courbure (R) du bord de coupe (42).

8. Poutre de choc selon la revendication 6 ou 7, caractérisée par un rayon de courbure (R) de 15 mm.
